# EUROPEAN PATENT SPECIFICATION

(11) **EP 2 209 746 B1**
(45) Date of publication and mention of the grant of the patent: **25.02.2015**
(21) Application number: 08838304.7
(22) Date of filing: 07.10.2008
(51) Int. Cl.: C02F 1/68, C02F 5/08

(54) **WATER RE-HARDENING PROCESS AND A SYSTEM THEREFOR**
VORRICHTUNG UND VERFAHREN ZUR AUFHÄRTUNG VON WASSER
PROCÉDÉ DE REDURCISSEMENT D'EAU ET SYSTÈME POUR LA MISE EN OEUVRE DE CE PROCÉDÉ

(30) Priority: 10.10.2007 US 960692 P
(43) Date of publication of application: 28.07.2010
(73) Proprietor: I.D.E. Technologies Ltd., Kadima 60920 (IL)
(72) Inventor: LIBERMAN, Boris, 67654 Tel Aviv (IL); ILEVICKY-OZEL, Maya, 67016 Tel Aviv (IL); EGOZY, Yaron, 67016 Tel Aviv (IL); FAIGON, Miriam, 44485 Kfar Saba (IL); DVORNIKOV, Victor, 67016 Tel Aviv (IL); PINHAS, Yosef, 38601 Hadera (IL)
(74) Representative: Virdee-Crofts, Kulwinder Kaur
(86) International application number: PCT/IL2008/001339
(87) International publication number: WO 2009/047764

(56) References cited:
- DE-A1- 2 134 865
- US-A- 3 218 241
- US-A- 3 527 702
- US-A- 4 222 825
- US-A- 4 692 252
- US-A- 5 695 646

## Description

### FIELD OF THE INVENTION

This invention relates to liquid re-hardening processes, in particular, re-hardening of water.

### BACKGROUND OF THE INVENTION

Known in the art are water re-hardening processes adapted for upgrading the water quality by increasing the PH level thereof and adding thereto specific substances, such as minerals (Ca, Mg, HC03). One known re-hardening process includes passing water through a limestone (CaCo₃) dissolution filter in the presence of free CO₂ dissolved in the water. Limestone is not easily dissolved in water and only a small quantity of dissolved CaCO₃ is present in a given volume of water at a given time. While water passes through the limestone, the dissolved limestone chemically reacts with the water and CO₂ in a reaction represented by the following equation:

(1) H₂O + CO₂ + CaCO₃ ←→ Ca(HCO₃)₂

At the beginning of the above reaction, when all the dissolved calcium is in its CaCO₃ form, any (even very small) amount of free CO₂ is capable of triggering the reaction, and the reaction will take place until a state of balance is achieved where no CaCO₃ turns to Ca(HCO₃)₂ and vise versa. This state is characterized by a certain amount of CO₂ still present in the solution in free form, corresponding to the amount of Ca(HCO₃)₂ already produced by the reaction. This CO₂ is normally referred to as equilibrium CO₂. If the amount of free CO₂ exceeds the amount of the equilibrium CO₂, limestone (CaCO₃) will transform to become Ca(HCO₃)₂, i.e. the reaction will operate to the right side of the equation. This additional CO₂ capable of causing such transformation is normally referred to as aggressive CO₂.

Thus, during the above reaction, the amount of the aggressive CO₂ tends to decrease while producing HCO₃ according to the above equation, whilst the amount of the equilibrium CO₂ will increase accordingly. Given an unlimited time and unlimited amount of CaCO₃ for the process, essentially no aggressive CO₂ would be left at the end thereof, leaving only the equilibrium CO₂ at an amount exactly sufficient to balance the amount of HCO₃ produced by the reaction, and prevent Ca(HCO₃)₂ from turning back into CaCO₃. In practice, however, the time for the process is limited so that the excess CO₂ remaining at the end thereof, comprises the equilibrium CO₂ and the remainder of the aggressive CO₂.

It would also be appreciated that the process has an efficiency, i.e. the capability to transform CaCO₃ to Ca(HCO₃)₂, which drops corresponding to the decrease in the amount of the aggressive CO₂. Thus, the efficiency of the dissolution process decreases in direct proportion to contact time between the water with the aggressive CO₂ and the limestone.

In known industrial re-hardening processes, at their end, the excess CO₂ (in aggressive and equilibrium form) is removed from the water by an additional process, usually involving the introduction of soda, for example NaOH, to produce Na(HCO₃). However, due to the costliness of NaOH required to dispose the excess CO₂, it is usually desirable to perform the dissolution process in such a way as to avoid high levels of excess CO₂. For this purpose, the contact time between the water and the limestone is increased as much as economically reasonable, to lower the level of free excess CO₂ to be removed at the end of the process, which excess CO₂ comprises a minor amount of aggressive CO₂ and a major amount of equilibrium CO₂.

The contact time is usually determined by the volume of limestone, per flow rate of water with the free CO₂ or acid. In practice, in order to produce large amounts of treated water requiring large amounts of CO₂, while avoiding high levels of excess CO₂, it is common to increase the contact time by correspondingly increasing the amount of limestone in accordance with the increased amounts of CO₂.

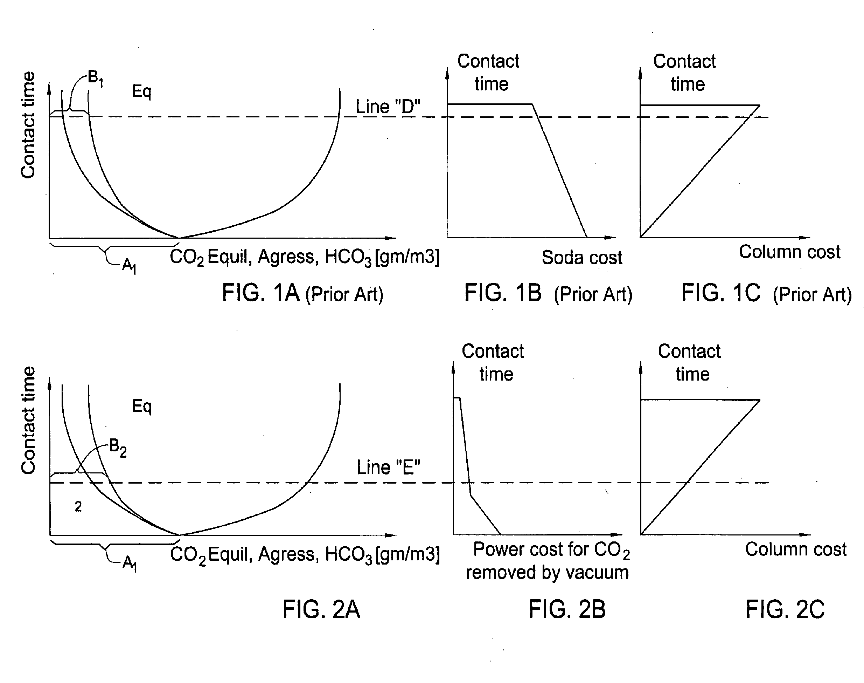

Therefore, a compromise is usually sought for in the above described process, which will provide an optimum between the cost of NaOH and size of the re-hardening (limestone) columns (contact time), as demonstrated in Figs. 1A to 1C of the drawings. With reference to line D in these Figures, the amount of overall excess CO₂ to be removed (designated B₁) with respect to the initial amount (designated A₁) is minimized by the increase of the contact time. This allows the reduction of NaOH costs, however entails an inadvertent increase in column cost.

### SUMMARY OF THE INVENTION

According to one aspect of the present invention there is provided a process for producing re-hardened water, including:
a) an infusion step in which at least CO₂ is introduced into water to be re-hardened, to produce a first solution containing free CO₂ of a concentration C_{1;}
b) a re-hardening step including passing said first solution through a re-hardening material to perform a dissolution process having a contact time t during which said re-hardening material is dissolved in said first solution and a chemical reaction takes place between the dissolved re-hardening material and a part of the CO₂ constituting an aggressive CO₂, to produce a second solution of water containing at least dissolution products, the aggressive CO₂ of a concentration reduced during the re-hardening step from about said C₁ to C2ₐ, and an equilibrium CO₂ of a concentration increased during the re-hardening step from about zero to C2ₑ, wherein at least one of the following conditions is met:
   C₂ₐ C₂ₑ and (C₂ₐ + C₂ₑ) < C₁;
   C₂ ≥ 0.25 C₁;
   t ≤ 15 min; and
c) a separation step including separating from said solution of a free excess CO₂ constituted by the aggressive CO₂ of the concentration C₂ₐ and the equilibrium CO₂ of the concentration C2ₑ, and removing it in a gas form, to produce said re-hardened water, the process further comprising a utilization step wherein said CO₂ in gas formed in step (c) is used in said infusion step (a).

According to a further aspect of the present invention there is provided an apparatus for producing re-hardened water for performing the above process, the apparatus comprising:
(a) a carbon dioxide absorber in fluid communication with a first inlet for receiving permeate water, a second inlet for receiving carbon dioxide and a third inlet for receiving carbon dioxide from a desorber, the absorber having an outlet for removal of a first solution containing free CO₂ at concentration C₁;
(b) at least one re-hardening column comprising a column body containing a re-hardening material adapted to engage in a dissolution process with the first solution, the column body having an inlet adapted to receive the first solution from the absorber and an outlet adapted for removal of a second solution containing dissolution products and containing free CO₂ at a concentration C₂ lower than C₁;
(c) a desorber having an inlet for receiving the second solution and separate therefrom free excess CO₂ in gas form at a first outlet thereby providing re-hardened water at a second outlet for removal; the apparatus further comprising:
(d) a CO₂ recycling line (R1) for passing free excess CO₂ from the first outlet of the desorber to the third inlet of the absorber.

The fact that the dissolution process is performed during a relatively short contact time ensures that the efficiency of the dissolution process is relatively high, though this is on the account of the relatively large amount of free CO2 left in the second solution.

However, due to the fact that free excess CO2 in a gas form can be removed from said second solution in an extremely cost efficient way, e.g. using a degassifier, a relatively large amount of the excess CO₂ which is obtained as a direct consequence of the shortened contact time, is of no concern. Thus, the concentration C2 = (C2a C2ₑ) of free excess CO₂ within the second solution after passing through said re-hardening step may be as high as about 60% of the concentration C₁ in the first solution. In other words, less than 75% of C₁ may be used to produce the second solution, i.e. 1-C₂/C₁ ≤0.75 (75%).

The cost-effective reduction in contact time compared to the common practice (***CP*** denoted by line D in Figs. 1A to 1C), relative to the amount of re-hardened water produced by the process, may be obtained, by one or more of the following:
▪ at a given constant flow rate ***Q_{CP}***, a relatively small column of the limestone, i.e. its relatively small volume V_{Inv}, may be used; in this case the column cost will be reduced while maintaining the same amount of re-hardened water;
▪ at a given volume ***V_{CP}***, a relatively high flow rate ***Q_{Inv}*,*****.*** of the water in the process steps may be used; in this case an increased amount of re-hardened water will produced without increasing the column cost; and
▪ at a given volume ***V_{CP}*** and flow rate ***Q_{CP}***, a greater initial concentration C₁ of CO₂ may be used; in this case, an increased amount of re-hardened water will be produced without increasing the column cost.

In the infusion step, the CO₂ may be provided into the water to be re-hardened from an external source, for example a CO₂ storage tank.

Alternatively, the CO₂ may be initially obtained as a result of a chemical reaction, e.g. occurred within the re-hardening column during a continuous process of producing re-hardened water. One example of this process may comprise the introduction of sulfuric acid H₂SO₄ into the water to be re-hardened, wherein when passing through said re-hardening column, the following chemical reactions take place:

(2) H₂SO₄ + 2CaCO₃ → CaSO₄ + Ca(HCO₃)₂

(3) H₂SO₄ + Ca(HCO₃)₂ → CO₂ + CaSO₄+ 4H₂0

The reaction (2) is essentially quick, wherein CO₂ and water may be produced by reaction (3) to form said first solution, during the beginning of passing of the acid with the water through the re-hardening material, the CO₂ produced by reaction (3) having the concentration C₁ of the first solution. The dissolution process of said first solution described by reaction (1) involving said CO₂ then takes place to form the second solution.

It would also be appreciated that products, such as CaSO₄, obtained during the above reactions may simply be passed into the separation step along with the second solution. Theses products remain within the re-hardened water since their presence therein is sometimes be desirable.

It would also be noted that the above reactions are not restricted to the use of sulfuric acid (H₂SO₄), and a large variety of substances may be used, for example, hydrochloric acid (HCl), etc.

The process of producing the re-hardened water as described above may further comprise a utilization step including utilizing said free excess CO₂, in a useful process. Such process may be any process which makes an economically efficient use of the excess CO₂. This may be for example injection of CO₂ in pretreatment stage of desalination process or selling CO₂ for an external use and investing the obtained profit in a required operation, for example removal of sediments of said re-hardening material, if created during said separation step.

Alternatively, said process may directly involve said CO₂ in gas form, for example or by a use thereof in the removal of sediments of said re-hardening material, if created during said separation step.

With reference to previously described chemical reactions (2) and (3) for obtaining CO₂, it should be understood that in case CO₂ is recycled to be used at the infusion step during the entire continuous re-hardening process, the infusion step may in fact be a two-stage step. During a first stage of the infusion step, CO₂ obtained during the separation step is used to produce a preliminary solution, with the CO₂ concentration being C₁'. During a second stage of the infusion step, taking place during beginning of passing of the preliminary solution through the re-hardening material, additional CO₂ of concentration C₁" is created by reaction (3) thus producing the first solution of total concentration C₁.

According to yet another aspect of the present invention there is provided a system adapted for performing any steps and operations described above.

In one particular embodiment, said system may comprise infusion, re-hardening and separation stages for performing the respective steps (a), (b) and (c) described above, and at least one recycling line adapted to deliver said free excess CO₂ from the separation stage to the infusion stage.

Said infusion and separation stages of the system may be of an essentially similar construction, wherein said system may be adapted to alternate between at least two operational modes during which the flow of water to be re-hardened is changed such that a stage functioning as the infusion stage in one mode of operation operates as the separation stage in the other mode of operation and vise versa. It would be appreciated that since the separation step of process of the present invention may cause scaling within the separation stage due to removal of CO₂ from said second solution in a gas form, the alternation between the functions of said infusion stage and said separation stage may provide a quick, cost efficient and simple way of removing the scale.

Said infusion, re-hardening and separation stages of the system may constitute a part of a single chamber having different sections in direct fluid communication therebetween or may be in the form of separate infusion, re-hardening and separation chambers connected by suitable piping.

The infusion chamber may be in the form of a CO₂ absorber adapted to receive water to be re-hardened and CO₂, and cause said CO₂ to be infused into the water due to the CO₂ having a higher partial pressure outside of the water than inside it.

Said re-hardening chamber may be in the form of a re-hardening column, and said re-hardening material contained therein may be, for example, limestone (CaCO₃), dolomit CaMg(CO₃)₂, etc. Also, several re-hardening columns may be used within a single system having one infusing chamber and one separation chamber. Such a design may allow circulating a greater overall amount of water within the system, consequently receiving a greater amount of re-hardened water at the end of the process.

As mentioned above, said separation chamber may be in the form of a CO₂ degassifier. The latter may also be referred to as 'desorber', and may comprise a mass transfer area contained within a shell, providing a surrounding environment for the second solution to be introduced therein.

Said mass transfer area may be in the form of large surface plates, rushing rings, etc. Said desorber may be adapted to receive said second solution and separate said free CO₂ (aggressive and equilibrium) therefrom in a gas form due to such CO₂ having a lower partial pressure in the surrounding environment than inside said second solution.

In order to provide the desired partial pressure difference between the second solution and its surrounding environment inside the desorber, the environment within the degassifier shell may be maintained at a vacuum condition, causing the free CO₂ to simply be emitted to the environment, which emission being facilitated by the large mass transfer area. Alternatively, vacuum does not necessarily have to be required, and air may be re-circulated within said shell due to the CO₂ therein having a low partial pressure. The re-circulation of air allows maintaining a low partial pressure of CO₂ in the surrounding environment to allow said emission.

Said system may further comprise a pipe-line arrangement comprising:
▪ a first feed line connected to said absorber adapted to provide water thereto, and a second feed line connected to said absorber adapted to provide CO₂ thereto; these lines may be combined into one common line;
▪ a first supply line connecting said absorber with said re-hardening column and adapted to deliver said first solution thereto, and a second supply line connecting said re-hardening column with said 'desorber' and adapted to deliver said second solution thereto;
▪ a product line connected to said 'desorber' adapted to remove re-hardened water therefrom; and
▪ a pump associated with said recycling line adjacent the absorber side, adapted to transfer said free CO₂ through said recycling line to said absorber.

The system may further comprise an alternation arrangement adapted to allow the alternation between the absorber and 'desorber' by the change in flow in an essentially continuous manner.

As previously described, the process according of the present invention may tend to cause scaling within separation stage. In particular, CaCO₃ formed from Ca(HCO₃)₂ due to the removal of CO₂ from said second solution tends to accumulate on the mass transfer area of the degassifer. For example, in the case of rushing rings, a prolonged use of the degassifier may cause the rushing rings to be fully clogged with CaCO₃, rendering the degassifier inactive. Thus, when a cleaning process is required to remove the scaling from the degassifier, it may be performed by the alternate use of the absorber and 'desorber' as described above.

### BRIEF DESCRIPTION OF THE DRAWINGS

In order to understand the invention and to see how it may be carried out in practice, embodiments will now be described, by way of non-limiting examples only, with reference to the accompanying drawings, in which:
**Figs. 1A** to **1C** are diagrams illustrating different parameters of a conventional process of producing re-hardened water;
**Figs. 2A** to **2C** are diagrams illustrating different parameters of a process of producing re-hardened water according to one embodiment of the present invention;
**Fig. 3** is a diagram representing concentration (%) of HCO₃ as dependent on the pH of re-hardened water;
**Figs. 4A** to **4C** illustrate a re-hardening system according to a number of embodiments of the present invention;
**Fig. 5** is a re-hardening system according to a further embodiment of the present invention;
**Fig. 6** is a schematic illustration of a further embodiment of the system according to the present invention, allowing alternation between the absorber and desorber; and
**Fig. 7** is a table denoting examples of values of system parameters and corresponding CO₂ and HCO₃ concentrations, in a system according to the present invention.

### DETAILED DESCRIPTION OF EMBODIMENTS

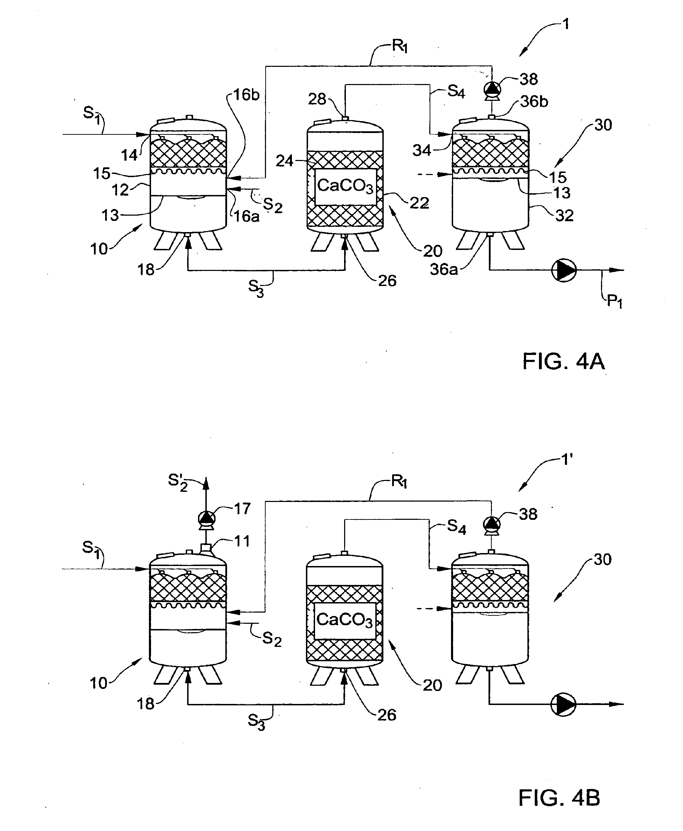

Fig. 4A shows, a basic re-hardening system generally designated as **1,** comprising three process chambers: a CO₂ absorber **10,** a re-hardening column **20** and a desorber **30.**

The CO₂ absorber **10** comprises a housing **12** formed with a first inlet **14** adapted to receive permeate water ***W_{Per}*** through a first supply line **S₁**, a second inlet **16a** adapted to receive CO₂ through a second supply line **S₂**, and a third inlet **16b,** also adapted to receive CO₂ from the desorber **30** as will be explained in detail later. A first solution ***L₁*** of CO₂ dissolved in the water ***W_{Per}***, is adapted to be formed within the housing 12. The housing **12** is further formed with an outlet **18** adapted for removal of the first solution ***L₁*** therefrom through a third supply line **S₃.** With reference to Fig. 2A, the first solution ***L₁*** has a concentration **C₁** of free CO₂.

The absorber 10 may comprise a water plate **13** and a mass transfer area, for example, an array of rushing rings **15.**

The re-hardening column **20** comprises a column body **22** containing a re-hardening material, for example, a CaCo₃ limestone **24** therein adapted to engage in a dissolution process with the first solution ***L₁*** supplied thereto. The body **22** is formed with an inlet **26** adapted to receive the first solution ***L₁*** from the absorber **10** through the supply line **S₃**, and an outlet **28** adapted for removal of a second solution ***L₂*** containing dissolution products and a lower concentration **C₂** of CO₂ therefrom through a fourth supply line **S₄**.

The desorber **30** has a housing **32** adapted to receive the second solution ***L₂*** through an inlet **34** thereof, and separate therefrom free excess CO₂ in gas form at a second outlet **36b** thereof, to provide re-hardened water at a first outlet **36a** thereof. The free excess CO₂ is adapted to be passed into a CO₂ recycling line ***R₁*** using a pump **38,** and the re-hardened water, i.e. product ***W_{Pro}*** is adapted to be removed from the desorber **30** through outlet **36b** and a product line ***P₁*.**

The desorber may be of any conventional construction. For example, similar to the absorber 10, it may comprise the water plate **13** and the array of rushing rings **15.**

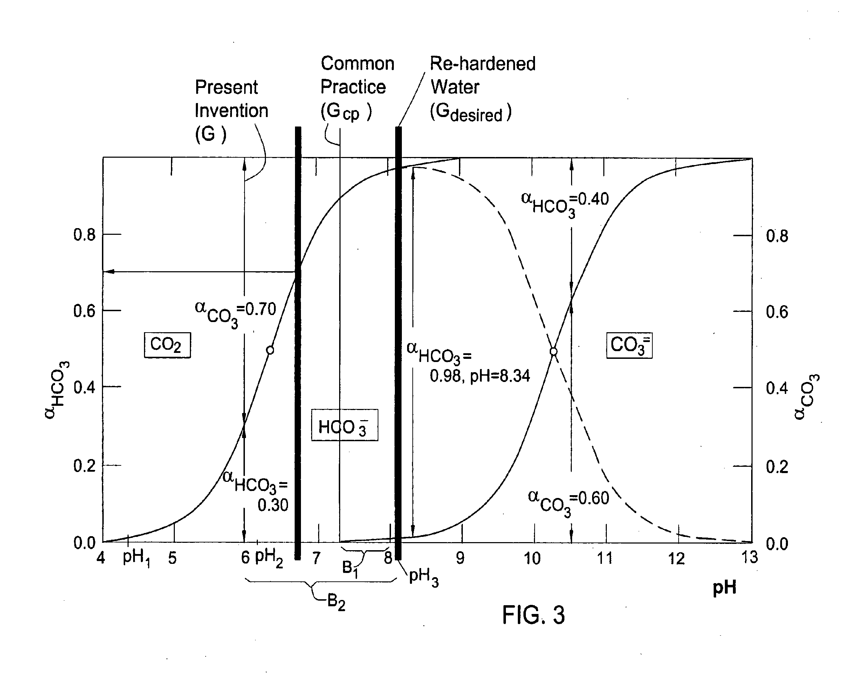

In operation, permeate water ***W_{Per}*** is introduced into the absorber **10** through the supply line **S₁** and inlet **14** and CO₂ is introduced into the absorber **10** via a supply line **S₂** and inlet **16a** at a pressure ***Pᵢₙ***. Within the absorber **10,** due to the gas CO₂ having a higher partial pressure than any CO₂ present in the water ***W_{Per}*,** the CO₂ is dissolved in the water to form a first solution ***L₁*.** The solution ***L₁*** has a high concentration **C₁** of CO₂ and low pH value **pH₁** (Shown Fig. 3) and is removed from the absorber **10** through an outlet **18** to a supply line **S₃.**

The supply line **S₃** transports the first solution ***L₁*** to the re-hardening column **20,** wherein the first solution ***L₁*** is passed through limestone (CaCo₃) causing a dissolution process in which the following chemical reaction (or a similar reaction involving an acid) takes place:

(1) H₂O + CO₂ + CaCO₃ ←→ Ca(HCO₃)₂.

Since, at the beginning of the process, limestone is only in its CaCO₃ form, the entire CO₂ within the solution ***L₁*** may trigger the reaction towards production of Ca(HCO₃)₂, and is therefore considered to be aggressive, as may be seen from Fig. 2A, where the entire CO₂ at this stage is designated as **A₁.**

After a contact time ***t*** determined according to the limestone volume **V** in the re-hardening column **20,** and flow rate **Q** of the system **1,** the dissolution process yields a second solution ***L₂*** having a lower concentration **C₂** of CO₂ and a higher pH level **pH₂** (shown Fig. 3). The concentration **C₂** of CO₂ in the second solution ***L₂*** is a combination of the concentration **C₂ₑ** of equilibrium CO₂ and concentration **C₂ₐ** of remaining aggressive CO₂, as may be observed from Fig. 2A. It would also be noted that **C₂ₐ** ≥ **C₂ₑ** and **C₂** < **C₁.** The second solution ***L₂*** is then removed from the re-hardening column **20** through an outlet **28** and supply line **S₄** to be introduced into the desorber **30** through inlet **34.**

Within the desorber **30,** a vacuum environment allows separation of the dissolved free excess CO₂ (aggressive and equilibrium, designated **B₂** in Fig. 2A) from the second solution ***L₂*,** due to the vacuum having a lower CO₂ partial pressure than the CO₂in the second solution ***L₂*.** The second solution ***L₂*** is sprayed on the rushing rings **15** which provide a greater surface area, and consequently better removal of free excess CO₂. CO₂ removal, in turn, raises the concentration percentage of HCO₃, and consequently raises the pH to an even higher level **pH₃** (shown Fig. 3). It would be mentioned, with reference to Fig. 2B, that using a desorber **30** is an extremely cost-effective way of removing free excess CO₂.

Turning to Fig. 3, the re-hardening process may be observed on a diagram of HCO₃ concentration (%) vs. pH of the water is shown. During the contact time ***t*** of the first solution ***L₁*** with the limestone **24,** the concentration of HCO₃ increases due to its creation during the chemical reaction (1) - the level of HCO₃ being denoted by curve **C** on the diagram. When removed from the re-hardening column **20** and moved to the desorber **30,** CO₂ is removed from the second solution ***L₂*,** causing the percentage of concentration of HCO₃ to further increase.

Removal of CO₂ from the second solution ***L₂*** also causes reaction (1) to operate in the left direction, i.e. Ca(HCO₃)₂ transforms back into CaCO₃. The CaCO₃ forms a sediment on the rushing rings 15, and after a while, the rushing rings **15** may become fully clogged with CaCO₃, rendering the desorber **30** inactive. Thus, a scale-removal process is required to clean the desorber **30.** One such scale-removal process will be describer in detail later.

After separation, free excess CO₂ is removed in gas form from the desorber **30** through an outlet **36b** at a pressure ***P_{end}** < **Pᵢₙ.*** A pump **38** raises the pressure back to the original ***Pᵢₙ*,** and returns the free excess CO₂ via CO₂ recycling line **R₁,** back into the absorber **10** through inlet **16b** as additional CO₂.

The levels of free excess CO₂ can be quite high since any free excess CO₂ is recycled back into the absorber **10.** Performing the re-hardening stage at a high-saturation CO₂ environment allows raising the efficiency of the entire process by reducing the contact time between the solution ***L₁*** and the limestone. Reducing the contact time allows using smaller columns **20,** thereby substantially reducing the cost thereof. However, it would be appreciated that the cost of CO2 circulation may appear to be a limiting factor to the amount of CO₂ within the system.

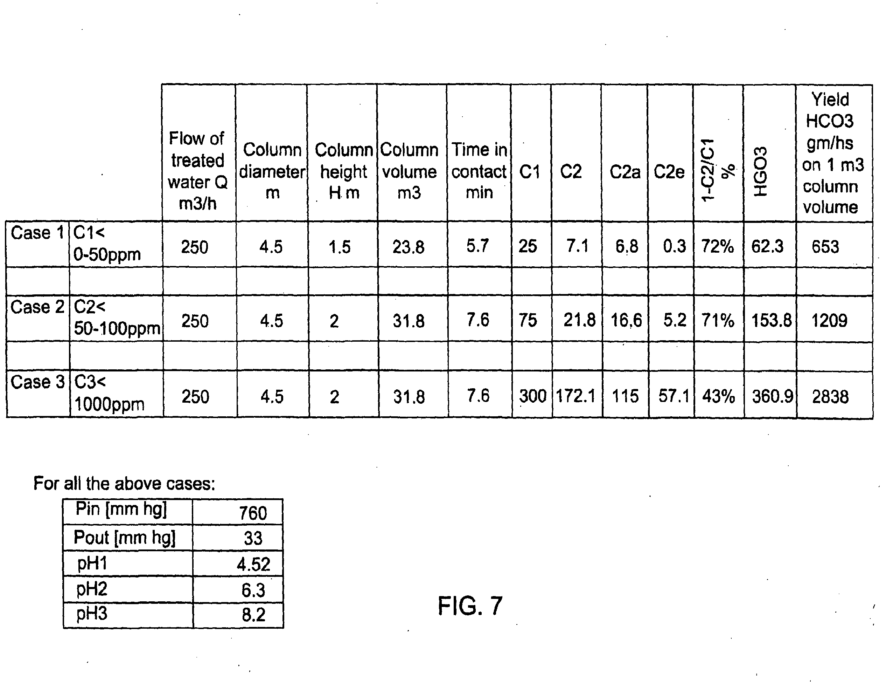

With reference to Fig. 7, the table shows possible values for various parameters of the system **1** and consequent values for concentration of CO₂ and HCO₃. As seen in the above table, the concentration C₂ may be remarkably high with respect to C₁, ranging from about 0.3C₁ for case_1 to about 0.6C₁ for case_3. Furthermore, the concentration C₂ₐ may be remarkably high with respect to the concentration C2ₑ, being in all the presented examples lower than twice the concentration of C2ₑ, i.e. C₂ₐ>2 C₂ₑ.

In addition, the intermediate pH value, i.e. the value pH₂ of the second solution upon exiting the re-hardening column **20,** is as low as 6.3. This further demonstrates the intensity of the dissolution process.

The measurements of concentrations of CO₂ may be performed by methods known *per se,* for example as described in: *'Standard Methods for the Examination of Water and Wastewater'* by Arnold E. Greenberg (Editor) ISBN: 0875532357:
▪ Ca⁺² - calcium ions measured by Standard Methods; gm/liter;
▪ HCO₃⁻ - bicarbonate ions measured by Standard Methods; gm/liter;
▪ pH - a measure of the acidity or alkalinity of a solution;
▪ CO₂^{free} - carbon dioxide gas dissolved in water can be measured by Standard Methods as CO₂ dissolved in water;
▪ CO₂^{eq} - Carbon dioxide (equilibrium) gas dissolved in water;
▪ CO₂^{ag} - Carbon dioxide (aggressive) gas dissolved in water;
▪ Kₛ¹⁻ - Thermodynamic infinite dilution solubility product constant for CaCO₃;
▪ K₁¹⁻ - Primary dissociation constant for H₂CO₃;
▪ K₂¹⁻ - Secondary dissociation constant for H₂CO₃;

Calculations of concentrations may be obtained from equations based on standard measurements as follows:
(G) - CO₂^{free} = (10^^{-pH} x (HCO₃-))/(K₁¹) [gm/liter] based on measured by Standard Methods pH and bicarbonate ions (HCO₃⁻);
(K) - CO₂^{eq} = (K₂¹ x (HCO₃⁻) x (Ca⁺²))/(K₁¹ x Kₛ¹) [gm/liter] based on measured by Standard Methods (HCO₃⁻) and (Ca⁺²);
(M) - CO₂^{ag} = CO₂^{free}- CO₂^{eq} [gm/liter];

Turning to Fig. 4B, a variation on the previous example of the system is shown in which the system **1'** serves as a first stage of a two stage re-hardening system **100** (not shown), and being adapted to work in conjunction with the previously described system **1.** The absorber **10** further comprises an additional outlet **11,** a pump **17** and an additional supply line **S₂',** which is adapted to be eventually coupled to line **S₂** of system **1.**

The system **1'** works in much the same way as previously described with respect to system **1,** however, the CO₂ is introduced into the absorber **10** at a lower pressure ***Pᵢₙ*,** for example, 250mm Hg, and the pump **38** is adapted to raise the pressure of the recycled free excess CO₂ only to 250mm Hg. Through recycling line **R₁** the CO₂ is recycled back to the absorber **10.** From the absorber **10,** excess CO₂ may be removed via outlet **11** and pump **17,** at ***Pᵢₙ*≈**760mm Hg.

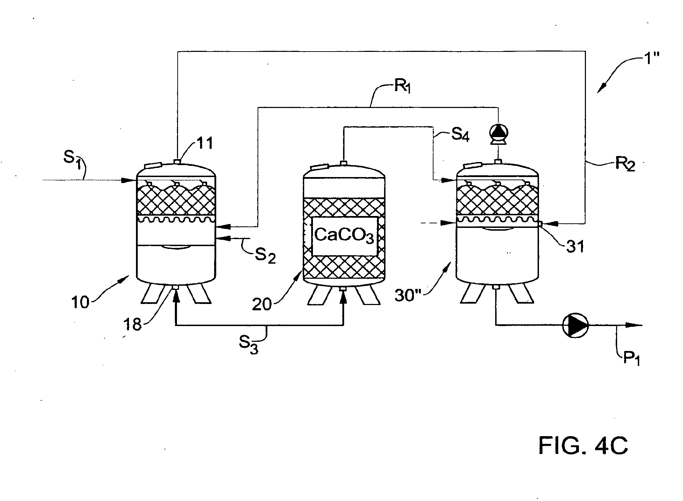

Turning to Fig. 4C, another example of a system **1"** is shown comprising a non-vacuum desorber **30".** The absorber **10** is formed with an additional outlet **11** and the desorber **30"** if formed with an additional inlet **31.** In addition, a second recycling line **R₂** is connected between the inlet **31** and the outlet **11.** In operation, the desorber **30"** works by circulating air therethrough wherein air and CO₂ are removed from the desorber **30",** the air being separated at the absorber **10** to be redirected via **R₂** back to the desorber **30".**

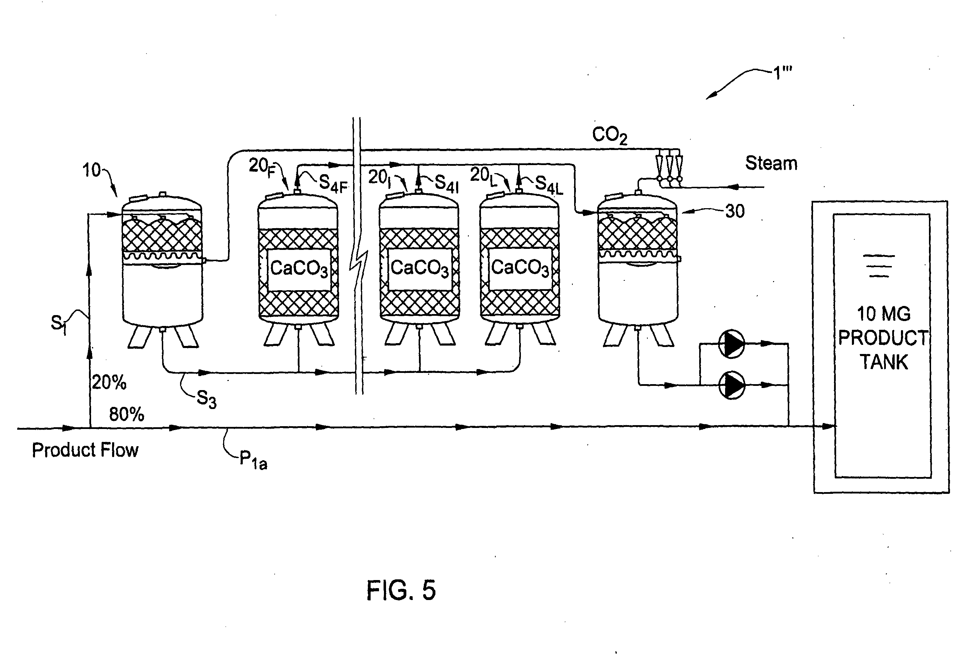

Fig. 5 refers to yet another design variation in which the system **1"'** comprises one absorber **10,** one desorber **30,** and a plurality of re-hardening columns, the first, intermediate and last being designated as **20_{F}, 20_{I}** and **20_{L}** respectively. Permeate water ***W_{Per}*** is provided into the absorber **10** through supply line **S₁**, branching off a main product line **P₁ₐ.** As in the previous examples, a first solution ***L₁*** is removed from the absorber **10** and introduced into line **S₃.** Supply line **S₃** branches off to the re-hardening columns **20_{F}, 20_{I}, 20_{L}.** Each re-hardening column **20** is provided with a supply line **S_{4F}, S_{4I}** and **S_{4L}** for removal of the second solution ***L₂*** therefrom. The rest of the system 1"' operates in essentially the same way as previously described with respect to the previous systems.

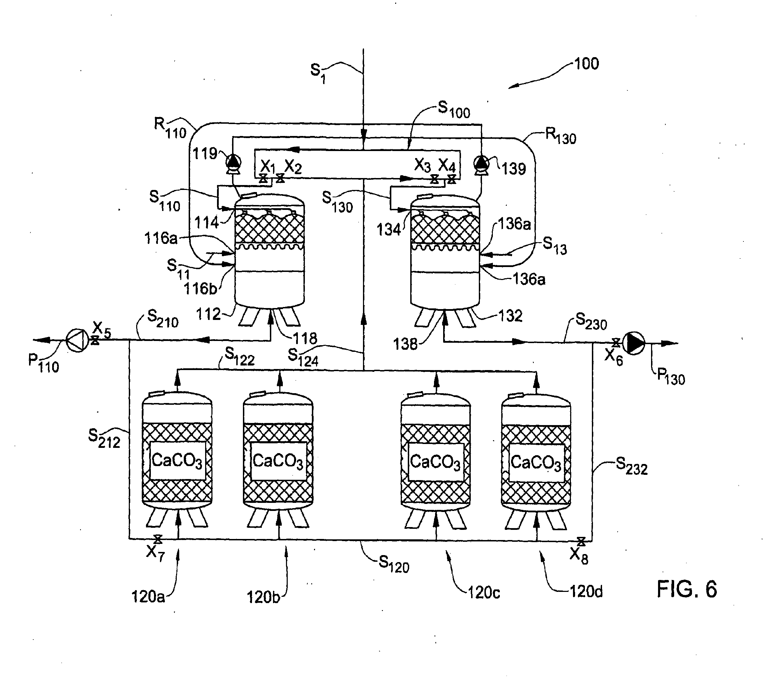

Turning to Fig. 6, and with reference to the process of scale removal from the rushing rings, as previously mentioned, an embodiment is shown of a system **100** which allows for a simple and cost-efficient way of scale removal. In this case, the system **100** comprises an absorber **110** and a desorber **130** which are essentially constructively similar, an array of re-hardening columns **120a** to **120d** and a piping network generally designated **PN** adapted to change the flow so as to alternate between a first operation mode in which the absorber **110** and desorber **130** operate as previously described, and a second operation mode in which the desorber **130** operates as the absorber **110** and vise versa.

The piping network **PN** comprises:
- a supply line **S₁**, and a supply loop **S₁₀₀** connected to two supply lines **S₁₁₀, S₁₃₀** adapted to provide permeate water to the absorber **110** and desorber **130** respectively;
- two supply lines **S₁₁** and **S₁₃** adapted for providing CO₂ into the absorber **110** and desorber **130** respectively;
- an array of supply lines **S₂₁₂, S₂₃₂,** and **S₁₂₀** adapted to provide the first solution ***L₁*** to the re-hardening columns **120;**
- two supply lines **S₁₂₂** and **S₁₂₄** adapted for removing the second solution ***L₂*** from the re-hardening columns **120;**
- two product lines **P₁₁₀** and **P₁₃₀** adapted to remove re-hardened (product) water from the system **100;**
- two dual-purpose lines **S₂₁₀** and **S₂₃₀** adapted to alternately provide the first solution ***L₁*** to lines **S₂₁₂** and **S₂₃₂** or product water ***W_{Pro}*** to the product lines **P₁₁₀** and **P₁₃₀** respectively; and
- an array of valves designated as **X₁** to **X₈** adapted for regulating the flow within the piping network **PN.**

In the first operation mode, valves **X₂, X**₄, **X₅** and **X₈** are closed. Thus, permeate water ***W_{Per}*** entering the piping network PN through the supply line **S₁** is transferred from the supply loop **S₁₀₀** to the absorber **110** via line **S₁₁₀** and inlet **114.**

The absorber **110** also receives CO₂ from an outside source through supply line **S₁₁** and produces a first solution ***L₁*** which is removed from the absorber **110** through outlet **118** into supply line **S₂₁₀.** Since valve **X₅** is shut, the first solution ***L₁*** is transported to supply line **S₂₁₂,** and from there, via supply line **S₁₂₀** into the re-hardening columns **120a-120d.**

Within the re-hardening columns **120** a dissolution process takes place, producing a second solution ***L₂*** delivered via supply lines **S₁₂₂** and **S₁₂₄** back to the supply loop **S₁₀₀.** With the valves **X₂** and **X₄** being closed, the second solution ***L₂*** is delivered into the desorber **130** where free excess CO₂ is separated from the second solution ***L₂*** to produce re-hardened (product) water ***W_{Pro}*** and free CO₂ in gas form. Product water ***W_{Pro}*** is transferred to the product line **P₁₃₀** and CO₂ in gas form is transported via pump **139** and recycling line **R₁₃₀** back to the absorber **110** where it is introduced therein through inlet **116b.**

During this entire mode of operation, lines **R₁₁₀** and **S₂₃₂** are disabled.

When the system **100** is switched to the second operation mode, valves **X₁, X₃, X₆** and **X₇** are first closed, and the respective valves **X₂, X₄, X₅** and **X₈** are then opened. In this mode of operation, permeate water ***W_{Per}*** from the supply loop **S₁₀₀** enters the desorber **130** through line **S₁₃₀** and not into the absorber **110,** and the entire process repeats itself, the absorber **110** now functioning as the desorber. However, in this mode of operation, lines **R₁₁₀** and **S₂₃₂** are active while lines **R₁₃₀** and **S₂₁₂** are disabled.

During the alternation, when the function of the desorber **130** is changed to that of the absorber **110,** the scaling, i.e. CaCO₃ gathered on the rushing rings tends to be removed due to its washing away by said first solution ***L₁*** and due to reaction (1) taking place to the right side of the equation, transformation CaCO₃ back into Ca(HCO₃). This alternation may be performed, for example, every 24 hours.

Those skilled in the art to which this invention pertains will readily appreciate that numerous changes, variations, and modifications can be made without departing from the scope of the invention as defined by the appended claims, *mutatis mutandis.*

## Claims

1. A process for producing re-hardened water, including:
a) an infusion step in which at least CO₂ is introduced into water to be re-hardened, to produce a first solution containing free CO₂ of a concentration C₁;
b) a re-hardening step including passing said first solution through a re-hardening material to perform a dissolution process having a contact time t during which said re-hardening material is dissolved in said first solution and a chemical reaction takes place between the dissolved re-hardening material and a part of the CO₂ constituting an aggressive CO₂, to produce a second solution of water containing at least dissolution products, the aggressive CO₂ of a concentration reduced during the re-hardening step from about said C₁ to C₂ₐ, and an equilibrium CO₂ of a concentration increased during the re-hardening step from about zero to C₂ₑ;
c) a separation step including separating from said second solution of a free excess CO₂ constituted by the aggressive CO₂ of the concentration C₂ₐ and the equilibrium CO₂ of the concentration C₂ₑ, and removing it in a gas form, to produce said re-hardened water
wherein the step (b) is performed so that at least one of the following conditions is met:
- C₂ₐ ≥ C₂ₑ and (C₂ₐ + C₂ₑ) < C₁;
- C₂ ≥ 0.25C₁; wherein C₂=C₂ₐ+C₂ₑ
- ***t*** ≤ 15 mins
the process further comprising a utilization step wherein said CO₂ in gas formed in step (c) is used in said infusion step (a).

2. A process according to Claim 1, wherein said free excess CO₂ is removed in a gas form using a degassifier.

3. A process according to Claim 1 or 2, wherein at least one of the following is performed during step (a):
- CO₂ is provided into said water to be re-hardened from a CO₂ storage tank; and
- CO₂ is obtained as a result of a chemical reaction occurring during a preceding re-hardening step in a continuous process of producing re-hardened water.

4. A process according to Claim 3, wherein said process comprises at least one of the following:
- introduction of sulfuric acid (H₂SO₄) into the water to be re-hardened to cause the following chemical reactions:
H₂SO₄ + 2CaCO₃ → CaSO₄ + Ca(HCO₃)₂
H₂SO₄ + Ca(HCO₃)₂ → CO₂ + CaSO₄+ 4H₂O;
and
- introduction of Chloric acid (HCl) into the water to be re-hardened.

5. A process according to any one of claims 1 to 4, wherein the utilization step includes the removal of any sediments of said re-hardening material if created during said separation step.

6. A process according to any one of claims 1 to 5, wherein said process is adapted to alternate between at least two operational modes during which the flow of water to be re-hardened is changed such that a stage functioning as the infusion stage in one mode of operation operates as the separation stage in the other mode of operation and vise versa.

7. An apparatus (1) for producing re-hardened water for performing the process according to any one of the preceding Claims; the apparatus comprising:
(a) a carbon dioxide absorber (10) in fluid communication with a first inlet (14) for receiving permeate water, a second inlet (16a) for receiving carbon dioxide and a third inlet (16b) for receiving carbon dioxide from a desorber, (30) the absorber having an outlet (18) for removal of a first solution containing free CO₂ at concentration C₁;
(b) at least one re-hardening column (20) comprising a column body (22) containing a re-hardening material (24) adapted to engage in a dissolution process with the first solution, the column body having an inlet (26) adapted to receive the first solution from the absorber (10) and an outlet (28) adapted for removal of a second solution containing dissolution products and containing free CO₂ at a concentration C₂ lower than C₁;
(c) a desorber (30) having an inlet (34) for receiving the second solution (20,28) and separate therefrom, a first outlet 36(b) to remove free excess CO₂ in gas form thereby providing re-hardened water at a second outlet (36a) for removal; the apparatus further comprising:
(d) a CO₂ recycling line (R1) for passing free excess CO₂ from the first outlet (36b) of the desorber (30) to the third inlet (16b) of the absorber (10).

8. An apparatus according to Claim 7, wherein said re-hardening material (24) is at least one of the following:
- limestone (CaCO₃); and
- dolomit CaMg(CO₃)₂.

9. An apparatus according to Claim 7, wherein said desorber (30) is a mass transfer area, optionally, constituted by rushing rings (15), contained within a shell (32).

10. An apparatus according to Claim 7 or 9, wherein the operation of said desorber is based on at least one of the following:
- vacuum; and
- circulation of air or other gas which has a low solubility in water.

11. An apparatus according to any one of Claims 7 to 10, wherein said apparatus further comprises a pipe-line arrangement (PN) comprising:
▪ a first feed line connected to said absorber (10) adapted to provide water thereto, and a second feed line connected to said absorber adapted to provide CO₂ thereto; these lines may be combined into one common line;
▪ a first supply line connecting said absorber(10)with said re-hardening column (20) and adapted to deliver said first solution thereto, and a second supply line connecting said re-hardening column with said 'desorber'(30) and adapted to deliver said second solution thereto;
▪ a product line connected to said 'desorber' adapted to remove re-hardened water therefrom; and
▪ a pump (38) associated with said recycling line (R1) adjacent the absorber, adapted to transfer said free CO₂ through said recycling line to said absorber.

12. An apparatus according to Claim 11, wherein said apparatus further comprises an alternation arrangement adapted to allow alternation between the absorber (10) and 'desorber' (30) by changing the flow path of water to be re-hardened.

## Patentansprüche

1. Verfahren zur Herstellung von aufgehärtetem Wasser, wobei das Verfahren Folgendes beinhaltet:
a) einen Infusionsschritt, in dem mindestens CO₂ in aufzuhärtendes Wasser eingebracht wird, um eine erste Lösung herzustellen, die freies CO₂ mit einer Konzentration C₁ enthält;
b) einen Aufhärtungsschritt, der das Leiten der ersten Lösung durch ein Aufhärtungsmaterial beinhaltet, um ein Lösungsverfahren mit einer Kontaktzeit t durchzuführen, während derer das Aufhärtungsmaterial in der ersten Lösung gelöst wird und eine chemische Reaktion zwischen dem aufgelösten Aufhärtungsmaterial und einem Teil des CO₂, das ein aggressives CO₂ darstellt, stattfindet, um eine zweite Wasserlösung herzustellen, die mindestens Lösungsprodukte, das aggressive CO₂ mit einer Konzentration, die während des Aufhärtungsschritts von etwa der C₁ auf C₂ₐ verringert wird, und ein Gleichgewichts-Co₂ mit einer Konzentration, die während des Aufhärtungsschritts von etwa null auf C₂ₑ erhöht wird, enthält;
c) ein Trennungsschritt, der das Trennen eines freien überschüssigen CO₂, das von dem aggressiven CO₂ mit der Konzentration C₂ₐ und dem Gleichgewichts-CO₂ mit der Konzentration C₂ₑ dargestellt wird, von der zweiten Lösung und Entfernen dieses in einer Gasform, um das aufgehärtete Wasser herzustellen,
wobei der Schritt (b) derart durchgeführt wird, dass mindestens eine der folgenden Bedingungen erfüllt wird:
- C₂ₐ ≥ C₂ₑ und (C₂ₐ + C₂ₑ) < C₁;
- C₂ ≥ 0,25C₁; wobei C₂ = C₂ₐ + C₂ₑ
- ***t*** ≤ 15 min,
wobei das Verfahren weiterhin einen Nutzungsschritt umfasst, wobei das CO₂ in Gas, das in Schritt (c) gebildet wurde, in dem Infusionsschritt (a) verwendet wird.

2. Verfahren nach Anspruch 1, wobei das freie überschüssige CO₂ in einer Gasform unter Verwendung eines Entgasers entfernt wird.

3. Verfahren nach Anspruch 1 oder 2, wobei mindestens eines der folgenden während Schritt (a) durchgeführt wird:
- CO₂ wird in das aufzuhärtende Wasser aus einem CO₂-Lagertank bereitgestellt und
- CO₂ wird infolge einer chemischen Reaktion erhalten, die während eines vorhergehenden Aufhärtungsschritts in einem kontinuierlichen Verfahren zur Herstellung von aufgehärtetem Wasser stattfindet.

4. Verfahren nach Anspruch 3, wobei das Verfahren mindestens eines der folgenden umfasst:
- Einbringen von Schwefelsäure (H₂SO₄) in das aufzuhärtende Wasser, um die folgenden chemischen Reaktionen zu verursachen:
H₂SO₄ + 2CaCO₃ → CaSO₄ +Ca(HCO₃)₂
H₂SO₄ + Ca(HCO₃)₂ → CO₂ + CaSO₄ + 4H₂O; und
- Einbringen von Chlorsäure (HCl) in das aufzuhärtende Wasser.

5. Verfahren nach einem der Ansprüche 1 bis 4, wobei der Nutzungsschritt das Entfernen von jeglichen Ablagerungen des Aufhärtungsmaterials beinhaltet, falls diese während des Trennungsschritts erzeugt werden.

6. Verfahren nach einem der Ansprüche 1 bis 5, wobei das Verfahren dazu eingerichtet ist, zwischen mindestens zwei Betriebsmodi zu wechseln, während derer der Fluss von aufzuhärtendem Wasser derart geändert wird, dass eine Stufe, die in einem Betriebsmodus als die Infusionsstufe fungiert, in dem anderen Betriebsmodus als die Trennungsstufe arbeitet und umgekehrt.

7. Vorrichtung (1) zur Herstellung von aufgehärtetem Wasser zum Durchführen des Verfahrens nach einem der vorhergehenden Ansprüche; wobei die Vorrichtung Folgendes umfasst:
(a) einen Kohlendioxidabsorber (10) in Fluidverbindung mit einem ersten Einlass (14) zum Aufnehmen von Permeatwasser, einem zweiten Einlass (16a) zum Aufnehmen von Kohlendioxid und einem dritten Einlass (16b) zum Aufnehmen von Kohlendioxid von einem Desorber (30), wobei der Absorber einen Auslass (18) zur Entfernung einer ersten Lösung, die freies CO₂ in einer Konzentration C₁ enthält, aufweist;
(b) mindestens eine Aufhärtungskolonne (20), die einen Kolonnenkörper (22) umfasst, der ein Aufhärtungsmaterial (24) enthält, das dazu eingerichtet ist, in ein Lösungsverfahren mit der ersten Lösung einzugreifen, wobei der Kolonnenkörper einen Einlass (26), der dazu eingerichtet ist, die erste Lösung von dem Absorber (10) aufzunehmen, und einen Auslass (28) aufweist, der zur Entfernung einer zweiten Lösung, die Lösungsprodukte enthält und freies CO₂ in einer Konzentration C₂, die niedriger als C₁ ist, enthält, eingerichtet ist;
(c) einen Desorber (30) mit einem Einlass (34) zum Aufnehmen der zweiten Lösung (20, 28) und Trennen davon, einem ersten Auslass 36(b), um freies überschüssiges CO₂ in Gasform zu entfernen, wodurch aufgehärtetes Wasser an einem zweiten Auslass (36a) zur Entfernung bereitgestellt wird; wobei die Vorrichtung weiterhin Folgendes umfasst:
(d) eine CO₂-Rückführleitung (R1) zum Leiten von freiem überschüssigem CO₂ von dem ersten Auslass (36b) des Desorbers (30) zu dem dritten Einlass (16b) des Absorbers (10).

8. Vorrichtung nach Anspruch 7, wobei das Aufhärtungsmaterial (24) mindestens eines der folgenden ist:
- Kalkstein (CaCO₃) und
- Dolomit CaMg(CO₃)₂.

9. Vorrichtung nach Anspruch 7, wobei der Desorber (30) eine Stoffaustauschfläche ist, die gegebenenfalls von Rushing-Ringen (15) gebildet wird, die in einer Hülse (32) enthalten sind.

10. Vorrichtung nach Anspruch 7 oder 9, wobei der Betrieb des Desorbers auf mindestens einem der folgenden basiert:
- Vakuum und
- Zirkulation von Luft oder einem anderen Gas, das eine geringe Wasserlöslichkeit hat.

11. Vorrichtung nach einem der Ansprüche 7 bis 10, wobei die Vorrichtung weiterhin eine Rohr-Leitungsanordnung (PN) umfasst, die Folgendes umfasst:
▪ eine erste Speiseleitung, die mit dem Absorber (10) verbunden ist und dazu eingerichtet ist, diesem Wasser bereitzustellen, und eine zweite Speiseleitung, die mit dem Absorber verbunden ist und dazu eingerichtet ist, diesem CO₂ bereitzustellen; diese Leitungen können zu einer gemeinsamen Leitung kombiniert sein;
▪ eine erste Zufuhrleitung, die den Absorber (10) mit der Aufhärtungskolonne (20) verbindet und dazu eingerichtet ist, die erste Lösung an diese zu liefern, und eine zweite Zufuhrleitung, die die Aufhärtungskolonne mit dem "Desorber" (30) verbindet und dazu eingerichtet ist, die zweite Lösung an diesen zu liefern;
▪ eine Produktleitung, die mit dem "Desorber" verbunden ist und dazu eingerichtet ist, aufgehärtetes Wasser aus diesem zu entfernen; und
▪ eine Pumpe (38), die mit der Rückführleitung (R1) benachbart zu dem Absorber in Verbindung steht und dazu eingerichtet ist, das freie CO₂ durch die Rückführleitung an den Absorber zu übertragen.

12. Vorrichtung nach Anspruch 11, wobei die Vorrichtung weiterhin eine Wechselanordnung umfasst, die dazu eingerichtet ist, einen Wechsel zwischen dem Absorber (10) und dem "Desorber" (30) durch Ändern des Fließwegs von aufzuhärtendem Wasser zu ermöglichen.

## Revendications

1. Un procédé de production d'eau redurcie, incluant :
a) une étape d'infusion dans laquelle au moins un CO₂ est introduit dans l'eau à redurcir pour produire une première solution contenant du CO₂ libre à une concentration C₁ ;
b) une étape de redurcissement incluant le passage de ladite première solution à travers une matière redurcissante pour effectuer un procédé de dissolution ayant un temps de contact ***t*** durant lequel ladite matière redurcissante est dissoute dans ladite première solution et une réaction chimique se produit entre la matière redurcissante dissoute et une partie du CO₂ constituant un CO₂ agressif pour produire une deuxième solution aqueuse contenant au moins des produits de dissolution, le CO₂ agressif d'une concentration réduite durant l'étape de redurcissement d'environ ledit C₁ à C₂ₐ, et un CO₂ d'équilibre d'une concentration accrue durant l'étape de redurcissement d'environ zéro à C₂ₑ ;
c) une étape de séparation incluant la séparation de ladite deuxième solution d'un CO₂ en excès libre constitué par le CO₂ agressif de la concentration C₂a et le CO₂ d'équilibre de la concentration C2ₑ, et son élimination sous une forme gazeuse, pour produire ladite eau redurcie
dans lequel l'étape (b) est effectuée de telle sorte qu'au moins l'une des conditions suivantes est satisfaite :
- C₂ₐ ≥ C₂ₑ et (C₂ₐ + C₂ₑ) < C₁ ;
- C₂ ≥ 0,25C₁ ; où C₂ = C₂ₐ + C₂ₑ
- ***t**≤* 15 min
le procédé comprenant en plus une étape d'utilisation dans lequel ledit CO₂ gazeux formé à l'étape (c) est utilisé dans ladite étape d'infusion (a).

2. Un procédé selon la revendication 1, dans lequel ledit CO₂ en excès libre est éliminé sous forme gazeuse à l'aide d'un dégazeur.

3. Un procédé selon la revendication 1 ou 2, dans lequel au moins un des éléments suivants est effectué durant l'étape (a) :
- Un CO₂ est introduit dans ladite eau à redurcir en provenance d'une cuve de stockage de CO₂ ; et
- Un CO₂ est obtenu du fait d'une réaction chimique ayant lieu au cours d'une étape de redurcissement précédente d'un procédé continu de production d'eau redurcie.

4. Un procédé selon la revendication 3, dans lequel ledit procédé comprend au moins un des éléments suivants :
- introduction d'acide sulfurique (H₂SO₄) dans l'eau à redurcir pour provoquer les réactions chimiques suivantes :
H₂SO₄ + 2CaCO₃ → CaSO₄ + Ca(HCO₃)₂
H₂SO₄ + Ca(HCO₃)₂ → CO₂ + CaSO₄ + 4H₂O ; et
- introduction d'acide chlorhydrique (HCl) dans l'eau à redurcir.

5. Un procédé selon l'une quelconque des revendications 1 à 4, dans lequel l'étape d'utilisation inclut l'élimination de sédiments de ladite matière redurcissante si ceux-ci ont été créés durant ladite étape de séparation.

6. Un procédé selon l'une quelconque des revendications 1 à 5, dans lequel ledit procédé est adapté pour alterner entre au moins deux modes opérationnels durant lesquels l'écoulement de l'eau à redurcir est changé de telle sorte qu'un stade fonctionnant en tant que stade d'infusion dans un mode de fonctionnement agit en tant que stade de séparation dans l'autre mode de fonctionnement et vice versa.

7. Un appareil (1) de production d'eau redurcie pour effectuer le procédé selon l'une quelconque des revendications précédentes ; l'appareil comprenant :
(a) un absorbeur de dioxyde de carbone (10) en communication fluide avec une première entrée (14) pour recevoir l'eau de perméat, une deuxième entrée (16a) pour recevoir le dioxyde de carbone et une troisième entrée (16b) pour recevoir le dioxyde de carbone d'un désorbeur (30), l'absorbeur ayant une sortie (18) pour éliminer une première solution contenant le CO₂ libre à une concentration C₁ ;
(b) au moins une colonne redurcissante (20) comprenant un corps de colonne (22) contenant une matière redurcissante (24) adaptée pour engager un procédé de dissolution avec la première solution, le corps de colonne ayant une entrée (26) adaptée pour recevoir la première solution de l'absorbeur (10) et une sortie (28) adaptée pour éliminer une deuxième solution contenant des produits de dissolution et contenant le CO₂ libre à une concentration C₂ inférieure à C₁ ;
(c) un désorbeur (30) ayant une entrée (34) pour recevoir la deuxième solution (20, 28) et séparée de celle-ci, une première sortie (36b) pour éliminer le CO₂ en excès libre sous forme gazeuse fournissant ainsi l'eau redurcie à une deuxième sortie (36a) pour l'élimination ; l'appareil comprenant en plus :
(d) une conduite de recyclage de CO₂ (R1) pour faire passer le CO₂ en excès libre de la première sortie (36b) au désorbeur (30) à une troisième sortie (16b) de l'absorbeur (10).

8. Un appareil selon la revendication 7, dans lequel ladite matière redurcissante est au moins un des éléments suivants :
- calcaire (CaCO₃) ; et
- dolomite CaMg(CO₃)₂.

9. Un appareil selon la revendication 7, dans lequel ledit désorbeur (30) est une surface de transfert de masse, constituée, en option, par des bagues en céramique (15) contenues dans une coque (32).

10. Un appareil selon la revendication 7 ou 9, dans lequel le fonctionnement dudit désorbeur est basé sur au moins un des éléments suivants :
- le vide ; et
- la circulation d'air ou d'un autre gaz qui a une faible solubilité dans l'eau.

11. Un appareil selon l'une quelconque des revendications 7 à 10, dans lequel ledit appareil comprend en plus un agencement de conduites (PN) comprenant :
▪ une première conduite d'amenée raccordée audit absorbeur (10) adaptée pour fournir de l'eau à ce dernier, et une deuxième conduite d'amenée raccordée audit absorbeur adaptée pour fournir le CO₂ à ce dernier ; ces conduites peuvent être combinées en une seule conduite commune ;
▪ une première conduite d'alimentation raccordant ledit absorbeur (10) avec ladite colonne redurcissante (20) et adaptée pour livrer ladite première solution à ce dernier, et une deuxième conduite d'alimentation raccordant ladite colonne redurcissante avec ledit 'désorbeur' (30) et adaptée pour livrer ladite deuxième solution à ce dernier ;
▪ une conduite de produit raccordée audit 'désorbeur' adaptée pour éliminer l'eau redurcie de ce dernier ; et
▪ une pompe (38) associée avec ladite conduite de recyclage (R1) adjacente à l'absorbeur, adaptée pour transférer ledit CO₂ libre par ladite conduite de recyclage audit absorbeur.

12. Un appareil selon la revendication 11, dans lequel ledit appareil comprend en plus un agencement à alternance adapté pour permettre l'alternance entre l'absorbeur (10) et le 'désorbeur' (30) en changeant le trajet de l'écoulement de l'eau à redurcir.
